# EUROPEAN PATENT APPLICATION

(11) **EP 4 769 056 A1**
(43) Date of publication of application: **01.07.2026**
(21) Application number: 25212083.7
(22) Date of filing: 29.10.2025
(51) Int. Cl.: G05F 1/46, H02M 3/07

(54) **VOLTAGE REGULATOR**

(30) Priority: 26.12.2024 US 202419001898
(71) Applicant: INTEL Corporation, Santa Clara, CA 95054 (US)
(72) Inventor: KUMAR, Raghavan, Hillsboro, 97124 (US); MATHEW, Sanu K., Portland, 97229 (US); KRISHNAMURTHY, Harish K., Beaverton, 97006 (US); GONG, Minxiang, Portland, 97229 (US)
(74) Representative: HGF

(57) **Abstract**

An apparatus comprises a push-pull regulation loop (PPRL), an input terminal, an output terminal, and a plurality of FC circuits. The PPRL comprises a PMOS transistor, an NMOS transistor, and a first plurality of capacitors. The input terminal and the output terminal are coupled to the PPRL via the first plurality of capacitors. The plurality of FC circuits includes a second plurality of capacitors. FC circuits of the plurality of FC circuits are coupled to each other and a rail between the input terminal and the output terminal. An FC circuit of the plurality of FC circuits comprises at least a first transistor switch and a second transistor switch coupled to a corresponding capacitor of the second plurality of capacitors.

## Description

### BACKGROUND

Cryptographic circuits such as Advanced Encryption Standard (AES) are vulnerable to Correlation Power Analysis (CPA) side-channel attacks (SCAs), where an adversary monitors current signatures or electromagnetic traces emanating from the die to decipher the value of embedded secret keys. For example, the attacker can construct Hamming-weight (HW) and Hamming-distance (HD) models of vulnerable circuit nodes for various key guesses and compute the correlation of measured signatures against these switching-activity models. With a sufficient number of measurements, the correct key guess can emerge, displaying a significantly higher correlation with physical data and compromising the security of the cipher.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings listed below.
FIG. 1 is a block diagram of a secure integrated voltage regulator (SIVR) architecture showing the insertion of a third reset phase, in accordance with some embodiments.
FIG. 2 is a block diagram of an SIVR with a push-pull regulation loop (PPRL), in accordance with some embodiments.
FIG. 3 illustrates a diagram of charging, transferring, and reset phases performed by the SIVR of FIG. 2, in accordance with some embodiments.
FIG. 4 is a graph of input current as seen from the proposed SIVR of FIG. 2, in accordance with some embodiments.
FIG. 5 is a block diagram of a push-pull amplifier that can be used as a resetting stage (e.g., in the SIVR of FIG. 2), in accordance with some embodiments.
FIG. 6 is a flow diagram of an example method for manufacturing an SIVR, in accordance with some embodiments.
FIG. 7 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

As used herein, the term "IO" indicates input/output. As used herein, the term "R-C" indicates resistance and capacitance. As used herein, the term "Rx" indicates receiver (or receive). As used herein, the term "Tx" indicates transmitter (or transmit). As used herein, the term "TRX" indicates transceiver. As used herein, the term "UCIe" indicates Universal Chiplet Interconnect Express. As used herein, the term "Vref" indicates reference voltage. As used herein, the term "Vin" indicates input voltage, and "Vout" indicates output voltage. As used herein, the terms "serially coupled," "serially connected," and "connected in series" are synonymous to each other and indicate a serial connection between two or more components/circuits where the serial connection can be based on a direct or indirect electrical connection between the two or more components/circuits. As used herein, the terms "parallel coupled," "parallel connected," and "connected in parallel" are synonymous to each other and indicate a parallel connection between two or more components/circuits where the parallel connection can be based on a direct or indirect electrical connection between the two or more components/circuits.

In some aspects, countermeasures to enhance SCA resistance can employ integrated voltage regulators, random masking, duplicate data paths, and current equalization using switched capacitors and pseudo-hysteresis controllers, incurring high area or performance overheads.

While low-dropout (LDO) regulators with random injected noise, shunt bleeders, and buck converters with randomized control offer significant side-channel suppression in the time domain, they are less effective against frequency-domain attacks. In contrast, arithmetic countermeasures like random masking, heterogeneous Galois-field arithmetic, and current-equalization modify the frequency content of current traces within cycle boundaries without significantly transforming time-domain characteristics. The disclosed techniques include a secure integrated voltage regulator (SIVR) that achieves effective side-channel leakage suppression uniformly across time- and frequency-domain SCA by breaking the correlation between the measured current signature and the data-dependent on-die switching activity. As a result, the attacker is presented with a flat current profile while attempting to mount a CPA attack on the underlying cryptographic engine, rendering the attack ineffective.

Previous SCA-resistant solutions described above are ineffective against combined time/frequency-domain analysis and also impose significant area/energy overheads on the underlying crypto engine. The solutions are also often dependent on the cryptographic algorithm used in the engine. On the other hand, the disclosed SIVR offers a crypto-agnostic solution that protects the underlying engine irrespective of the specific algorithm/arithmetic being computed.

The proposed SIVR architecture is a switched capacitor-based integrated voltage regulator solution that aims at completely isolating (both physically and electrically) the input current signature from the downstream encryption engine, breaking the correlation between the measured current signature and the data-dependent on-die switching activity. This leads to a flat current profile at the input independent of the kind of crypto engine and the associated load variations during encryption.

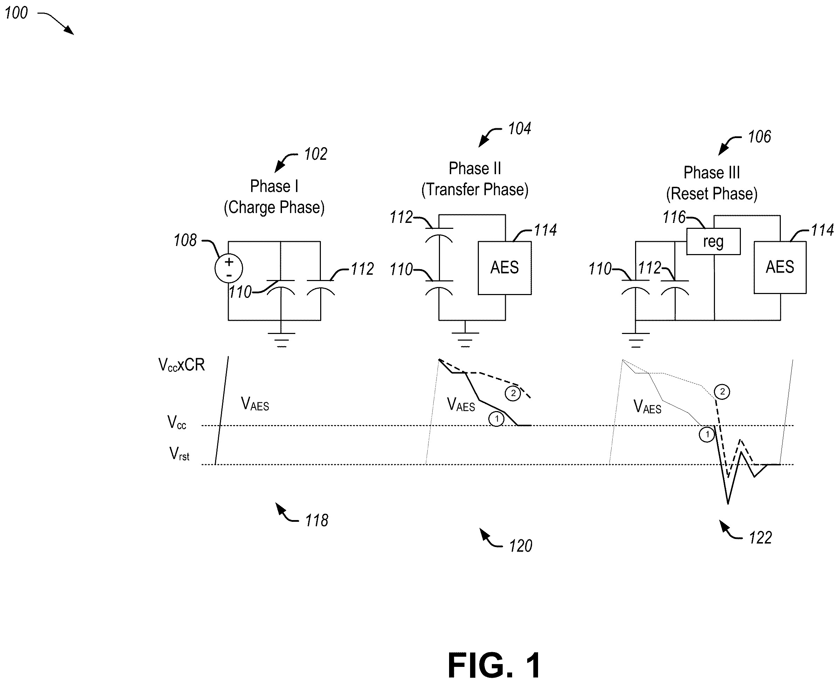

FIG. 1 is a block diagram of a secure integrated voltage regulator (SIVR) architecture 100 showing the insertion of a third reset phase, in accordance with some embodiments. Referring to FIG. 1, SIVR architecture 100 can include a voltage source 108 and charging capacitors 110 and 112. SIVR architecture 100 can be configured to operate in three phases, such as charge phase 102, transfer phase 104, and reset phase 106. Corresponding voltage profiles for phases 102, 104, and 106 are illustrated by voltage graphs 118, 120, and 122, respectively.

During the transfer phase 104, the stored charge of the charging capacitors 110 and 112 is discharged (used) by the AES circuit 114.

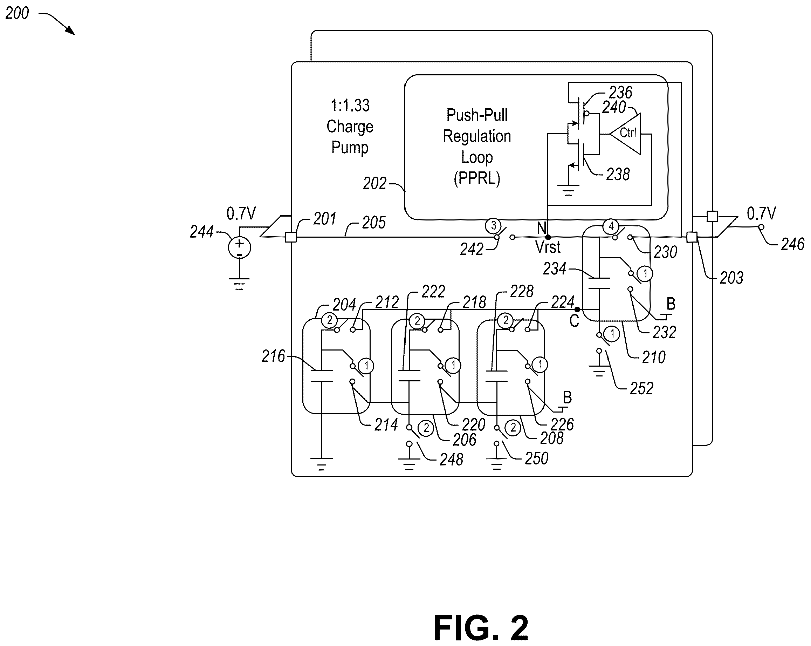

During the reset phase 106, regulator 116 can be configured to adjust the voltage (and current) to a pre-configured reset level (e.g., Vrst). In some aspects, regulator 116 can be configured as a push-pull regulation loop (PPRL) (e.g., PPRL 202 of FIG. 2).

Unlike conventional switched capacitor converter operations, which have a charging and discharging phase, the proposed SIVR enables a third "reset" phase (e.g., reset phase 106) in addition to the charging and discharging phases to ensure the capacitor charging phase always starts back at the same point as the previous cycle, thereby ensuring that the input current profile is independent of the encryption engine activity. This correct-by-construction method helps eliminate any correlation between the load and the input current, presenting a flat current profile when an attacker tries to mount a CPA attack on the underlying cryptographic engine.

FIG. 2 is a block diagram of an SIVR 200 with a push-pull regulation loop (PPRL), in accordance with some embodiments. Referring to FIG. 2, SIVR 200 includes PPRL 202, a plurality of flying capacitor (FC) circuits (e.g., FC circuits 204, 206, 208, and 210), transistor switches (or switches) 248, 250, 252, and 242, and a rail 205 coupled between an input terminal 201 and an output terminal 203. In some aspects, an FC circuit can also be referred to as an FC tile.

In some aspects, input terminal 201 is coupled to a voltage source 244, and output terminal 203 is coupled to a cryptographic circuit input terminal 246.

In some aspects, FC circuit 210 includes FC 234 and switches 230 and 232. In some aspects, FC circuit 208 includes FC 228 and switches 224 and 226. In some aspects, FC circuit 206 includes FC 222 and switches 218 and 220. In some aspects, FC circuit 204 includes FC 216 and switches 212 and 214.

In some aspects, switches 248, 250, and 252 couple respective FC circuits 206, 208, and 210 to ground.

In some aspects, FC circuits 204, 206, and 208 are coupled to FC circuit 210 at node C.

The PPRL 202 can be configured to include a PMOS transistor 236, an NMOS transistor 238, and a control circuit 240, all coupled as illustrated in FIG. 2. In some aspects, the control circuit 240 can be configured to activate or deactivate switches (as discussed below) to enable the charge phase 102, the transfer phase 104, and the reset phase 106.

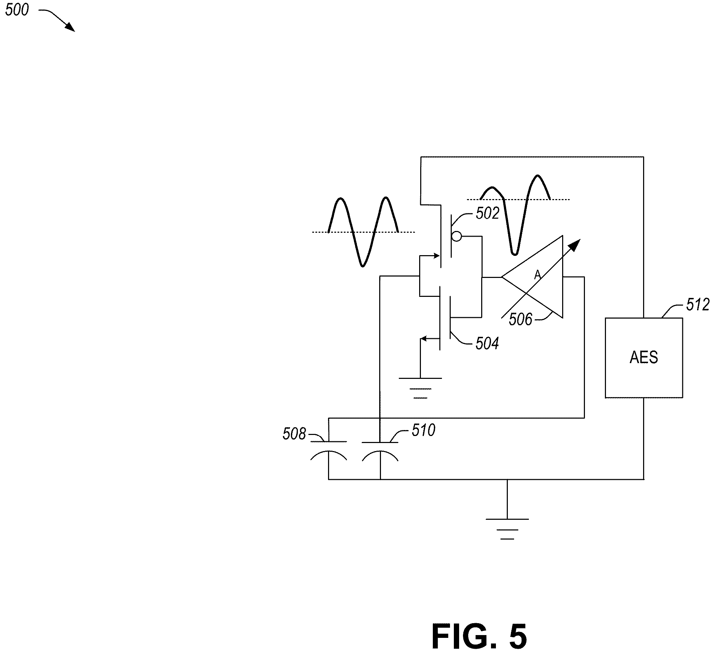

In some aspects, PPRL 202 can be configured as the resetting stage 500 of FIG. 5. In some aspects, PPRL 202 is coupled to rail 205 at node N (as illustrated in FIG. 2).

The switches in FIG. 2 are also referenced to indicate one of groups 1, 2, 3, or 4, which they can be associated with. For example, switch group 1 can include switches 214, 220, 226, 252, and 232. Switch group 2 can include switches 248, 250, 212, 218, and 224. Switch group 3 can include switch 242. Switch group 4 can include switch 230.

In some aspects, the charge phase 102 can be initiated (e.g., by control circuit 240) by turning ON switches of groups 1 and 3 and turning OFF switches of groups 2 and 4.

In some aspects, the transfer phase 104 can be initiated (e.g., by the control circuit 240 for transferring a charge to terminal 246 of a cryptographic circuit) by turning ON switches of groups 2 and 4 and turning OFF switches of groups 1 and 3.

In some aspects, the reset phase 106 can be initiated (e.g., by the control circuit 240) by turning ON switches of group 1 and turning OFF switches of groups 2, 3, and 4.

In some aspects, when the switches of group 1 are activated, the charge passes between FC circuit 210 and FC circuits 208, 206, and 204 via node B.

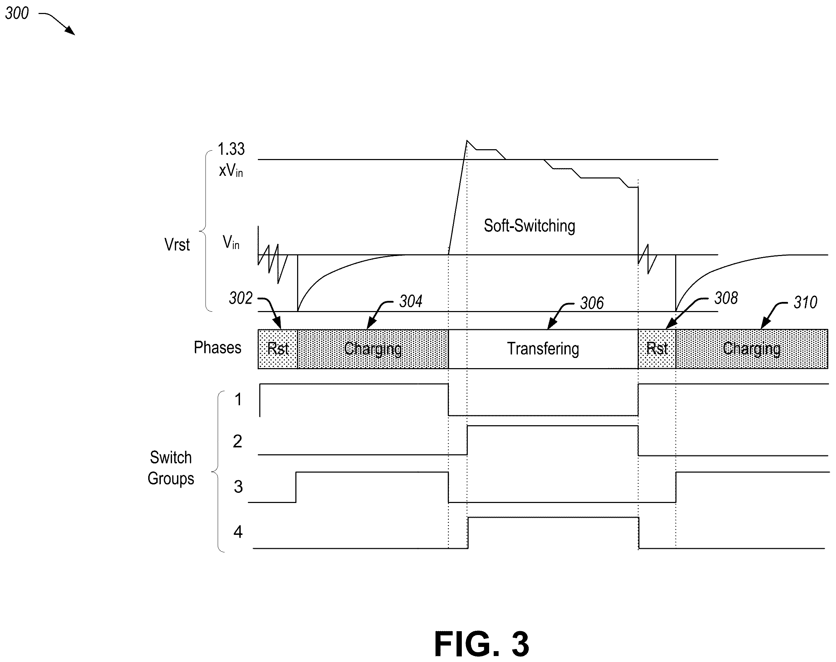

The sequencing and activation of switches in different groups during the disclosed three phases is also illustrated in FIG. 3.

FIG. 3 illustrates diagram 300 of the charge, transfer, and reset phases performed by the SIVR 200 of FIG. 2, in accordance with some embodiments. Referring to FIG. 3, diagram 300 illustrates the activation of switches during sequential phases, including reset phase 302, charge phase 304, transfer phase 306, reset phase 308, and charge phase 310.

The proposed SIVR architecture (e.g., as illustrated in FIG. 2) can be configured as a boosting charge pump that takes the input voltage and generates 1.33*Vin as the output voltage, unlike traditional solutions that generally employ a 1:1 ratio. This allows the SOC to have other IPs operate directly from the input supply without taking an efficiency hit from another IVR like an LDO/SC/Buck solution.

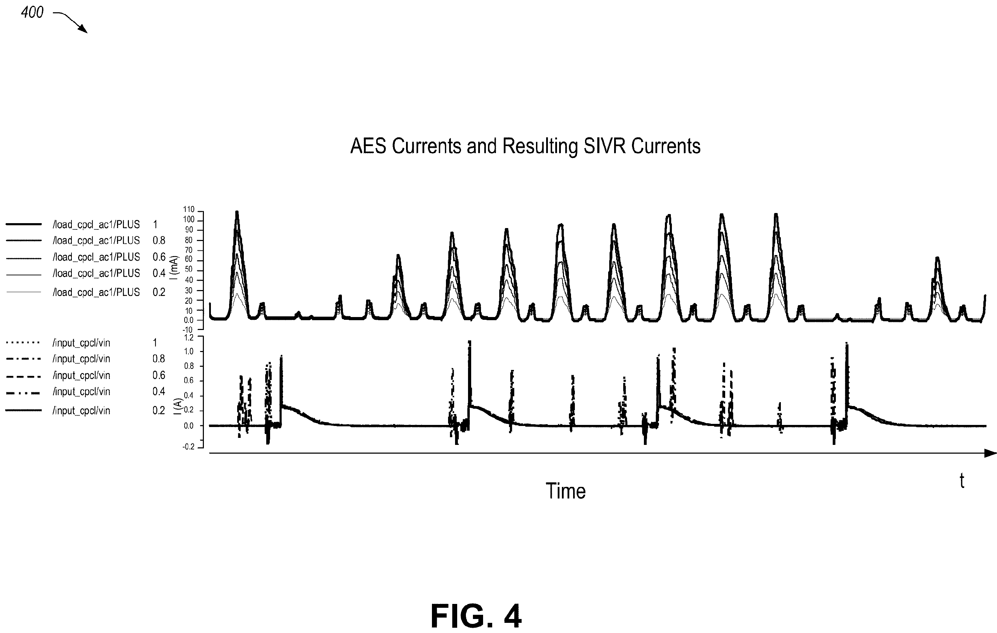

In some aspects, the ratio of SIVR 200 can be selected to be 1:1.33 to optimize capacitor count and value and associated area overhead, minimize switch area, and provide reasonable efficiency while still enabling higher voltage to the encryption engine and ensuring the capacitors reset to start charging from the same point at the end of the cycle. The timing diagram for a 2-phase SIVR (as illustrated in FIG. 3) demonstrates the charging, discharging, and reset phases of the proposed SIVR. Transient simulation results of the proposed SIVR are illustrated in FIG. 4.

FIG. 4 is a graph 400 of input current as seen from the proposed SIVR of FIG. 2, in accordance with some embodiments. As illustrated in FIG. 4, the input current, as seen from the proposed SIVR, shows insensitivity to encryption engine load variations from 20-120mA, validating the efficacy of the proposed IVR architecture.

FIG. 5 is a block diagram of a push-pull amplifier 500 that can be used as a resetting stage (e.g., the PPRL 202 in the SIVR of FIG. 2), in accordance with some embodiments. Referring to FIG. 5, amplifier 500 can include a PMOS transistor 502, an NMOS transistor 504, a control circuit 506, and capacitors 508 and 510. The amplifier 500 can be configured to supply voltage to a cryptographic circuit (e.g., AES circuit 512) coupled to PMOS transistor 502 and capacitors 508 and 510 (as illustrated in FIG. 5).

The push-pull LDO architecture in FIG. 5 can be used to bring the capacitor voltages (e.g., voltages of capacitors 508 and 510) back to the original starting point (e.g., perform a reset to Vrst as discussed above). While the implementation of the reset stage is shown as a push-pull LDO, the idea can be extended to other implementations (e.g., another switched capacitor or a buck regulator), depending on the available area.

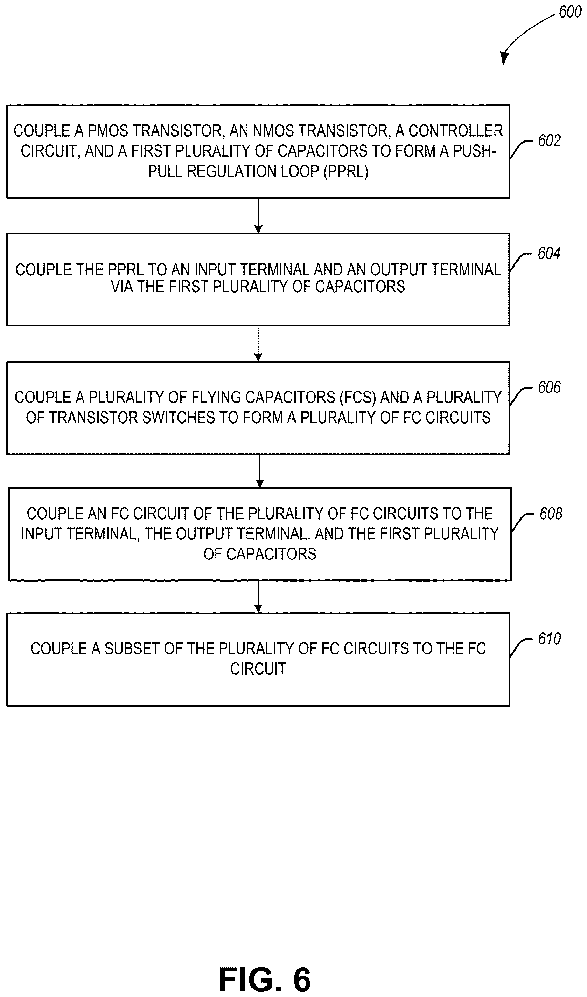

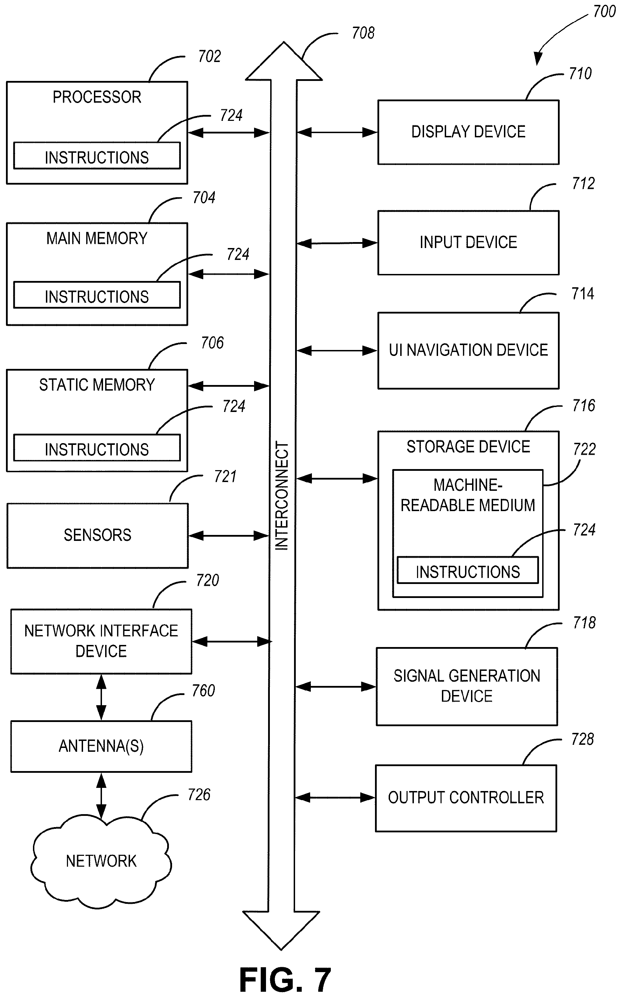

FIG. 6 is a flow diagram of an example method 600 for making a voltage regulator, in accordance with some embodiments. Referring to FIG. 6, method 600 includes operations 602, 604, 606, 608, and 610, which may be executed by a processor, an embedded controller, a receiver circuit, a transceiver circuit, or another processor of a computing device (e.g., hardware processor 702 of machine 700 illustrated in FIG. 7, which can include one or more of the circuits discussed in connection with FIGS. 1-5). In some embodiments, one or more of the circuits discussed in connection with FIGS. 1-5 can perform the functionalities (or include the configurations or circuitry) associated with FIG. 6, as well as one or more of the examples listed below.

At operation 602, a PMOS transistor, an NMOS transistor, a controller circuit, and a first plurality of capacitors are coupled to form a push-pull regulation loop (PPRL).

At operation 604, the PPRL is coupled to an input terminal and an output terminal via the first plurality of capacitors.

At operation 606, a plurality of flying capacitors (FCs) and a plurality of transistor switches are coupled to form a plurality of FC circuits.

At operation 608, an FC circuit of the plurality of FC circuits is coupled to the input terminal, the output terminal, and the first plurality of capacitors.

At operation 610, a subset of the plurality of FC circuits is coupled to the FC circuit.

FIG. 7 illustrates a block diagram of an example machine 700 upon which any one or more of the techniques (e.g., methodologies) discussed herein may perform. In alternative embodiments, the machine 700 may operate as a standalone device or may be connected (e.g., networked) to other machines. In a networked deployment, machine 700 may operate in the capacity of a server machine, a client machine, or both in server-client network environments. In an example, machine 700 may function as a peer machine in a peer-to-peer (P2P) (or other distributed) network environment. The machine 700 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 700 may include a hardware processor 702 (e.g., a central processing unit (CPU), a graphics processing unit (GPU), a hardware processor core, or any combination thereof), a main memory 704, and a static memory 706, some or all of which may communicate with each other via an interlink (e.g., bus) 708. In some aspects, the main memory 704, the static memory 706, or any other type of memory (including cache memory) used by machine 700 can be configured based on the disclosed techniques or can implement the disclosed memory devices.

Specific examples of main memory 704 include Random Access Memory (RAM) and semiconductor memory devices, which may include, in some embodiments, storage locations in semiconductors such as registers. Specific examples of static memory 706 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 700 may further include a display device 710, an input device 712 (e.g., a keyboard), and a user interface (UI) navigation device 714 (e.g., a mouse). In an example, the display device 710, the input device 712, and the UI navigation device 714 may be a touchscreen display. The machine 700 may additionally include a storage device (e.g., drive unit or another mass storage device) 716, a signal generation device 718 (e.g., a speaker), a network interface device 720, and one or more sensors 721, such as a global positioning system (GPS) sensor, compass, accelerometer, or other sensors. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 702 and/or instructions 724 may comprise processing circuitry and/or transceiver circuitry.

The storage device 716 may include a machine-readable medium 722 on which one or more sets of data structures or instructions 724 (e.g., software) embodying or utilized by any one or more of the techniques or functions described herein can be stored. Instructions 724 may also reside, completely or at least partially, within the main memory 704, within static memory 706, or the hardware processor 702 during execution thereof by machine 700. In an example, one or any combination of the hardware processor 702, the main memory 704, the static memory 706, or the storage device 716 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 722 is illustrated as a single medium, the term "machine-readable medium" may include a single medium or multiple media (e.g., a centralized or distributed database and/or associated caches and servers) configured to store instructions 724.

An apparatus of machine 700 may be one or more of a hardware processor 702 (e.g., a central processing unit (CPU), a graphics processing unit (GPU), a hardware processor core, or any combination thereof), a main memory 704 and a static memory 706, one or more sensors 721, a network interface device 720, one or more antennas 760, a display device 710, an input device 712, a UI navigation device 714, a storage device 716, instructions 724, a signal generation device 718, and an output controller 728. The apparatus may be configured to perform one or more of the methods and/or operations disclosed herein. The apparatus may be intended as a component of machine 700 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 700 and that causes machine 700 to perform any one or more of the techniques of the present disclosure, or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 724 may further be transmitted or received over a communications network 726 using a transmission medium via the network interface device 720 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network

(e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.8.4 family of standards, a Long Term Evolution (LTE) family of standards, a Universal Mobile Telecommunications System (UMTS) family of standards, peer-to-peer (P2P) networks, among others.

In an example, the network interface device 720 may include one or more physical jacks (e.g., Ethernet, coaxial, or phone jacks) or one or more antennas to connect to the communications network 726. In an example, the network interface device 720 may include one or more antennas 760 to wirelessly communicate using at least one single-input multiple-output (SIMO), multiple-input multiple-output (MIMO), or multiple-input single-output (MISO) techniques. In some examples, the network interface device 720 may wirelessly communicate using multiple-user MIMO techniques. The term "transmission medium" shall be taken to include any intangible medium that can store, encode, or carry instructions for execution by machine 700 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an apparatus comprising a PMOS transistor comprising a drain terminal coupled to a first terminal of a cryptography circuit, an NMOS transistor comprising a drain terminal coupled to a source terminal of the PMOS transistor, and a first capacitor comprising a first terminal and a second terminal, the first terminal of the first capacitor coupled to the drain terminal of the PMOS transistor; and the second terminal of the first capacitor coupled to a second terminal of the cryptography circuit.

In Example 2, the subject matter of Example 1 includes subject matter where a gate of the PMOS transistor is coupled to a gate of the NMOS transistor.

In Example 3, the subject matter of Example 2 includes subject matter where a source of the NMOS transistor is coupled to a ground terminal.

In Example 4, the subject matter of Example 3 includes a control circuit comprising an input terminal and an output terminal, the input terminal of the control circuit coupled to the gate of the PMOS transistor.

In Example 5, the subject matter of Example 4 includes a second capacitor comprising a first terminal and a second terminal, the first terminal of the second capacitor coupled to the input terminal of the control circuit.

In Example 6, the subject matter of Example 5 includes subject matter where the first terminal of the second capacitor is coupled to the second terminal of the cryptography circuit and the second terminal of the first capacitor.

In Example 7, the subject matter of Example 6 includes subject matter where the second terminal of the first capacitor and the second terminal of the second capacitor are coupled to an input voltage terminal via a first switching circuit.

In Example 8, the subject matter of Example 7 includes subject matter where the second terminal of the first capacitor and the second terminal of the second capacitor are coupled to an output voltage terminal via a second switching circuit.

In Example 9, the subject matter of Example 8 includes a third capacitor comprising a first terminal and a second terminal, wherein the second terminal of the first capacitor and the second terminal of the second capacitor are coupled to the first terminal of the third capacitor.

In Example 10, the subject matter of Example 9 includes one or more additional capacitors coupled to the second terminal of the third capacitor.

In Example 11, the subject matter of Examples 5-10 includes a system-on-chip (SoC), the SoC comprising an integrated circuit (IC), the IC comprising at least two of the following: the NMOS transistor, the PMOS transistor, the first capacitor, the second capacitor, or the control circuit.

In Example 12, the subject matter of Example 11 includes subject matter where the SoC further comprises at least one connector and wherein the at least one connector conforms with at least one of Universal Serial Bus (USB), High-Definition Multimedia Interface (HDMI), Thunderbolt, Peripheral Component Interconnect Express (PCIe), or Ethernet specifications.

Example 13 is an apparatus comprising a push-pull regulation loop (PPRL) comprising a PMOS transistor, an NMOS transistor, and a first plurality of capacitors; an input terminal and an output terminal, the input terminal and the output terminal coupled to the PPRL via the first plurality of capacitors; and a plurality of flying capacitor (FC) circuits comprising a second plurality of capacitors, the plurality of FC circuits coupled to each other and a rail between the input terminal and the output terminal, and an FC circuit of the plurality of FC circuits further comprising at least a first transistor switch and a second transistor switch coupled to a corresponding capacitor of the second plurality of capacitors.

In Example 14, the subject matter of Example 13 includes a third transistor switch coupled between the input terminal and a node of the PPRL and a fourth transistor switch coupled between the node of the PPRL and the output terminal.

In Example 15, the subject matter of Example 14 includes subject matter where the first transistor switch is associated with a first plurality of transistor switches corresponding to the plurality of FC circuits, and wherein the second transistor switch is associated with a second plurality of transistor switches corresponding to the plurality of FC circuits.

In Example 16, the subject matter of Example 15 includes a controller circuit that causes charging of one or more of the second plurality of capacitors based on activating the third transistor switch and the first plurality of transistor switches and deactivating the fourth transistor switch and the second plurality of transistor switches.

In Example 17, the subject matter of Example 16 includes subject matter where the controller circuit causes transferring a charge of the one or more of the second plurality of capacitors to the output terminal based on deactivating the third transistor switch and the first plurality of transistor switches and activating the fourth transistor switch and the second plurality of transistor switches.

In Example 18, the subject matter of Example 17 includes subject matter where the controller circuit causes a reset of voltage at the node of the PPRL based on activating the first plurality of transistor switches and deactivating the third transistor switch, the fourth transistor switch, and the second plurality of transistor switches.

In Example 19, the subject matter of Examples 13-18 includes subject matter where an FC in a first FC circuit of the plurality of FC circuits is coupled to the rail and wherein one or more FCs in a subset of the plurality of FCs are serially coupled to each other and the FC in the first FC circuit.

Example 20 is a process of making a voltage regulator, comprising coupling a PMOS transistor, an NMOS transistor, a controller circuit, and a first plurality of capacitors to form a push-pull regulation loop (PPRL); coupling the PPRL to an input terminal and an output terminal via the first plurality of capacitors; coupling a plurality of flying capacitors (FCs) and a plurality of transistor switches to form a plurality of FC circuits; coupling an FC circuit of the plurality of FC circuits to the input terminal, the output terminal, and the first plurality of capacitors; and coupling a subset of the plurality of FC circuits to the FC circuit.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus comprising:
a PMOS transistor comprising a drain terminal coupled to a first terminal of a cryptography circuit;
an NMOS transistor comprising a drain terminal coupled to a source terminal of the PMOS transistor; and
a first capacitor comprising a first terminal and a second terminal, the first terminal of the first capacitor coupled to the drain terminal of the PMOS transistor; and the second terminal of the first capacitor coupled to a second terminal of the cryptography circuit.

2. The apparatus of claim 1, wherein a gate of the PMOS transistor is coupled to a gate of the NMOS transistor, and wherein a source of the NMOS transistor is coupled to a ground terminal.

3. The apparatus of claim 2, further comprising:
a control circuit comprising an input terminal and an output terminal, the input terminal of the control circuit coupled to the gate of the PMOS transistor; and
a second capacitor comprising a first terminal and a second terminal, the first terminal of the second capacitor coupled to the input terminal of the control circuit.

4. The apparatus of claim 3, wherein the first terminal of the second capacitor is coupled to the second terminal of the cryptography circuit and the second terminal of the first capacitor.

5. The apparatus of claim 4, wherein the second terminal of the first capacitor and the second terminal of the second capacitor are coupled to an input voltage terminal via a first switching circuit, wherein the second terminal of the first capacitor and the second terminal of the second capacitor are coupled to an output voltage terminal via a second switching circuit.

6. The apparatus of claim 5, further comprising:
a third capacitor comprising a first terminal and a second terminal, wherein the second terminal of the first capacitor and the second terminal of the second capacitor are coupled to the first terminal of the third capacitor; and
one or more additional capacitors coupled to the second terminal of the third capacitor.

7. The apparatus of claim 3, further comprising:
a system-on-chip, SoC, the SoC comprising an integrated circuit, IC, the IC comprising at least two of the following: the NMOS transistor, the PMOS transistor, the first capacitor, the second capacitor, or the control circuit,
wherein the SoC further comprises at least one connector, and wherein the at least one connector conforms with at least one of a Universal Serial Bus, USB, specification, a High-Definition Multimedia Interface, HDMI, specification, a Thunderbolt specification, a Peripheral Component Interconnect Express, PCIe, specification, or an Ethernet specification.

8. An apparatus comprising:
a push-pull regulation loop (PPRL) comprising a PMOS transistor, an NMOS transistor, and a first plurality of capacitors;
an input terminal and an output terminal, the input terminal and the output terminal coupled to the PPRL via the first plurality of capacitors; and
a plurality of flying capacitor (FC) circuits comprising a second plurality of capacitors, the plurality of FC circuits coupled to each other and a rail between the input terminal and the output terminal, and an FC circuit of the plurality of FC circuits further comprising at least a first transistor switch and a second transistor switch coupled to a corresponding capacitor of the second plurality of capacitors.

9. The apparatus of claim 8, further comprising:
a third transistor switch coupled between the input terminal and a node of the PPRL; and
a fourth transistor switch coupled between the node of the PPRL and the output terminal,
wherein the first transistor switch is associated with a first plurality of transistor switches corresponding to the plurality of FC circuits, and wherein the second transistor switch is associated with a second plurality of transistor switches corresponding to the plurality of FC circuits.

10. The apparatus of claim 9, further comprising:
a controller circuit, the controller circuit causes charging of one or more of the second plurality of capacitors based on activating the third transistor switch and the first plurality of transistor switches and deactivating the fourth transistor switch and the second plurality of transistor switches,
wherein the controller circuit causes transferring a charge of the one or more of the second plurality of capacitors to the output terminal based on deactivating the third transistor switch and the first plurality of transistor switches and activating the fourth transistor switch and the second plurality of transistor switches, and wherein the controller circuit causes a reset of voltage at the node of the PPRL based on activating the first plurality of transistor switches and deactivating the third transistor switch, the fourth transistor switch, and the second plurality of transistor switches.

11. The apparatus of any of claims 10-12, wherein an FC in a first FC circuit of the plurality of FC circuits is coupled to the rail, and wherein one or more FCs in a subset of the plurality of FCs are serially coupled to each other and the FC in the first FC circuit.

12. A method of making a voltage regulator, comprising:
coupling a PMOS transistor, an NMOS transistor, a controller circuit, and a first plurality of capacitors to form a push-pull regulation loop, PPRL;
coupling the PPRL to an input terminal and an output terminal via the first plurality of capacitors;
coupling a plurality of flying capacitors, FCs, and a plurality of transistor switches to form a plurality of FC circuits;
coupling an FC circuit of the plurality of FC circuits to the input terminal, the output terminal, and the first plurality of capacitors; and
coupling a subset of the plurality of FC circuits to the FC circuit.

13. The method of claim 12, further comprising:
coupling a third transistor switch between the input terminal and a node of the PPRL.

14. Machine-readable storage including machine-readable instructions, when executed, causes a computer/transmitter/receiver to implement a method as claimed in any preceding claim.

15. A computer program comprising instructions which, when the program is executed by a computer, cause the computer to carry out the method as claimed in any preceding claim.
